# EUROPÄISCHE PATENTANMELDUNG

(11) **EP 0 679 009 A2**
(43) Veröffentlichungstag der Anmeldung: **25.10.1995**
(21) Anmeldenummer: 95200879.5
(22) Anmeldetag: 07.04.1995
(51) Int. Cl.: H04M 19/00

(54) **Vermittlungsvorrichtung mit einer Speiseschaltung zur Gleichstromversorgung eines Teilnehmerendgeräts**

(30) Priorität: 14.04.1994 DE 4412811
(71) Anmelder: Philips Patentverwaltung GmbH, 22335 Hamburg (DE); PHILIPS ELECTRONICS N.V., 5621 BA Eindhoven (NL)
(72) Erfinder: Zimmermann, Andreas, D-20097 Hamburg (DE)
(74) Vertreter: Volmer, Georg, Dipl.-Ing.

(57) **Zusammenfassung**

Die Erfindung bezieht sich auf eine Vermittlungsvorrichtung mit mindestens einer Speiseschaltung, die zur Gleichstromversorgung mindestens eines Teilnehmerendgerätes vorgesehen ist. Insbesondere ist die Speiseschaltung für digitale Teilnehmerendgeräte vorgesehen. Die Erfindung bezieht sich außerdem auf die verwendete Speiseschaltung. Es wird vorgeschlagen, eine erste und zweite Begrenzungschaltung (6,11) vorzusehen. Die erste Begrenzungsschaltung (6) weist eine erste Reihenschaltung aus einer ersten Speisetransistoranordnung (8) und einer ersten Speisewiderstandsanordnung (R1) zur Begrenzung eines durch die erste Reihenschaltung fließenden Speisestroms auf. Die zweite Begrenzungsschaltung (11) weist eine zweite Reihenschaltung aus einer zweiten Speisetransistoranordnung (13) und einer zweiten Speisewiderstandsanordnung (R2) zur Begrenzung eines durch die zweite Reihenschaltung fließenden Speisestroms (Is) auf. Ein am Steuereingang der zweiten Speisetransistoranordnung (13) anliegendes Potential (V0) hängt von einer an der ersten Reihenschaltung anliegenden Spannung (Ur) ab.

## Beschreibung

Die Erfindung bezieht sich auf eine Vermittlungsvorrichtung mit mindestens einer Speiseschaltung, die zur Gleichstromversorgung mindestens eines Teilnehmerendgeräts vorgesehen ist.

Treten bei der Gleichstromversorgung eines Teilnehmerendgeräts im Fehlerfall Überströme auf, d.h. unzulässig hohe Speiseströme, die beispielsweise durch eine durch statische Aufladung entstandene Überspannung oder einen Kurzschluß auf den Teilnehmerleitungen des Teilnehmerendgeräts verursacht werden, besteht die Gefahr, daß eine Teilnehmerleitung beschädigt wird (insbesondere ist ein Brand auf einer Teilnehmerleitung zu vermeiden) oder daß Bauelemente der Vermittlungsvorrichtung beschädigt werden. Aus diesem Grund muß die Speiseschaltung einen Schutz gegen Überströme aufweisen.

Aus der britischen Patentanmeldung GB 2 186 763 A ist für diesen Zweck eine Schutzschaltung angegeben, die zum Schutz gegen Überspannungen an ihrem Ausgang, der mit einem Teilnehmerendgerät gekoppelt ist, ein Nebenschlußbauelement aufweist. Überströme werden mit Hilfe zweier Transistoren detektiert, die bei einem Überstrom ein monostabiles Kippglied so ansteuern, daß dieses Kippglied über ein weiteres monostabiles Kippglied zwei als Speisetransistoren arbeitende Feldeffekt-Transistoren sperrt. Die Feldeffekt-Transistoren werden somit als steuerbare Widerstände und als Schalter eingesetzt, über die ein Speisestrom für das Teilnehmerendgerät fließt.

Der Erfindung liegt die Aufgabe zugrunde, eine Vermittlungsvorrichtung mit einer Speiseschaltung zu schaffen, die einen einfachen und kostengünstigen Schutz gegen Überströme auf den Teilnehmerleitungen zum Teilnehmerendgerät gewährleistet.

Die Aufgabe wird dadurch gelöst, daß die Speiseschaltung
- eine erste Begrenzungsschaltung mit einer ersten Reihenschaltung aus einer ersten Speisetransistorandordnung und einer ersten Speisewiderstandsanordnung zur Begrenzung eines durch die erste Reihenschaltung fließenden Speisestroms und
- eine zweite Begrenzungsschaltung mit einer zweiten Reihenschaltung aus einer zweiten Speisetransistoranordnung und einer zweiten Speisewiderstandsanordnung zur Begrenzung eines durch die zweite Reihenschaltung fließenden Speisestroms
enthält, wobei ein am Steuereingang der zweiten Speisetransistoranordnung anliegendes Potential von einer an der ersten Reihenschaltung anliegenden Spannung abhängt.

Die Gleichstromversorgung des Teilnehmerendgeräts erfolgt über zwei Strompfade. Fließt ein Speisestrom durch das Teilnehmerendgerät, dient einer der Strompfade zur Hinleitung und der andere Strompfad zur Rückleitung des von der Speiseschaltung gelieferten Speisestroms. Für jeden Strom pfad ist eine Begrenzungsschaltung zur Begrenzung des Speisestroms vorgesehen. Die Begrenzungsschaltungen werden in Fehlerfällen wie bei einem Kurzschluß oder einer hohen Überspannung auf den Teilnehmerleitungen wirksam, wenn der Speisestrom über einem jeweils vorgebbarem Schwellwert liegt. Dann wird der Speisestrom durch Sperren der als steuerbare Widerstände und als Schalter wirkenden Transistoranordnungen in den Begrenzungsschaltungen erniedrigt. Da das am Steuereingang der zweiten Speisetransistoranordnung anliegende Potential von einer an der ersten Reihenschaltung anliegenden Spannung abhängt, ist es möglich, beide Begrenzungsschaltungen auf einfache Weise aufeinander abzustimmen. So ist im Überstromfall ein in etwa gleicher Spannungsabfall an der ersten und zweiten Transistoranordnung vorteilhaft. Die auftretende Verlustleistung wird so auf die beiden Transistoranordnungen gleichmäßig aufgeteilt. Die maximale Verlustleistung für jede einzelne der beiden Speisetransistoranordnungen wird dadurch minimiert. Dies ermöglicht eine Verwendung von Transistoren für die Speisetransistoranordnungen, die für geringe Verlustleistungen ausgelegt und damit kostengünstig sind.

Zur Realisierung einer Abhängigkeit der Steuerspannung der zweiten Speisetransistoranordnung von der an der ersten Reihenschaltung anliegenden Spannung ist zwischen einem ersten und einem zweiten Bezugspotential ein Spannungsteiler in Reihe zur ersten Reihenschaltung angeordnet. Der mittlere Anschluß des Spannungsteilers ist mit dem Steuereingang der zweiten Speisetransistoranordnung gekoppelt.

Durch diese Kopplung arbeitet die zweite Begrenzungsschaltung in Abhängigkeit von der ersten Begrenzungsschaltung. Wird bei einem Überstrom die erste Transistoranordnung der ersten Reihenschaltung gesperrt, steigt die an der ersten Reihenschaltung anliegende Spannung an. Dies führt bei der erfindungsgemäßen Ausgestaltung zu einem geänderten am Steuereingang der zweiten Speisetransistoranordnung anliegenden Potential, so daß auf einfache Weise durch ein Sperren der ersten Transistoranordnung auch ein Sperren der zweiten Speisetransistoranordnung bewirkt wird. Die Spannungen an den beiden Speisetransistoranordnungen und die entsprechenden Verlustleistungen werden im Überstromfall durch die oben beschriebene und mit Hilfe des Spannungsteilers leicht einstellbare Kopplung auf die beiden Begrenzungsschaltungen gleichmäßig verteilt.

In einer anderen Ausgestaltung der Erfindung enthält die erste Begrenzungsschaltung einen ersten Transistor, dessen Steuerspannung von der Spannung an der ersten Speisewiderstandsanordnung abhänigig ist. Das am Steuereingang der ersten Speisetransistoranordnung anliegende Potential ist von der am ersten Transistor anliegenden Spannung abhängig.

Überschreitet bei einem Überstrom die Spannung an der zur Messung eines Überstroms dienenden ersten Speisewiderstandsanordnung einen einstellbaren Schwellwert, geht der erste Transistor in den leitenden Zustand über. Da die am ersten Transistor anliegende Spannung die Steuerspannung der ersten Transistoranordnung bestimmt, geht diese in den sperrenden Zustand über und der Speisestrom wird erniedrigt. Insbesondere eine zerstörerische Wirkung eines durch einen Kurzschluß verursachten Überstroms wird verhindert.

In einer anderen Ausgestaltung ist dem ersten Transistor ein dritter Widerstand parallel geschaltet ist. Es ist ein parallel zum ersten Transistor angeordneter zweiter Transistor vorgesehen, dessen Steuerspannung von der Spannung an der ersten Speisewiderstandsanordnung abhängig ist, wobei die beiden Transistoren durch eine Diode entkoppelt sind. Der zweite Transistor wird bei einem betragsmäßig kleineren Speisestrom leitend als der erste Transistor und wirkt im leitenden Zustand einem Stromfluß durch den dritten Widerstand entgegen. Bei einem Überstrom wird ein Kondensator über die Parallelschaltung aus drittem Widerstand und erstem Transistor umgeladen.

Für Überströme, die zwar größer als ein Speisestrom im Normalbetrieb sind, aber noch unterhalb des Schwellwerts liegen, bei dem die erste Begrenzungsschaltung durch einen Übergang des ersten Transistors in den leitenden Zustand wirksam wird, erzeugt diese Ausgestaltung ein verzögertes Abschalten der Speiseschaltung. Für eine von der Höhe des Überstroms abhängige Zeit wird der Überstrom von der Speiseschaltung zunächst aufrechterhalten, indem der Kondensator über den dritten Widerstand, dessen Spannung die erste Transistoranordnung steuert, umgeladen wird. Der parallel zum dritten Widerstand liegende erste Transisor sperrt, d.h. die erste und damit auch die zweite Begrenzungsschaltung sind nicht wirksam. Der Überstrom wird solange von der Speiseschaltung geliefert, bis der Kondensatorstrom und damit die Spannung am dritten Widerstand soweit abgesunken sind, daß die erste Transistoranordnung beginnt, in den sperrenden Zustand übergehen. Ab diesem Zeitpunkt sinkt der Speisestrom und folgt dem Abfall des Kondensatorstroms, wenn der Überstromfall immer noch vorliegt. Auf diese Weise ist die Speiseschaltung in der Lage, einen kurzzeitigen Überstrom zu liefern, der beispielsweise beim Anschluß eines Teilnehmerendgeräts fließt, um Kondensatoren des Teilnehmerendgeräts aufzuladen. Ein solcher zeitlich begrenzter Überstrom stellt einen normalen Betriebsfall dar und führt nicht zu einer Abschaltung der Speiseschaltung.

Für den Fall, daß der Überstrom so groß ist, daß neben dem zweiten auch der erste Transistor leitend wird und damit die beiden Begrenzungsschaltungen wirksam werden, folgt der Wert des Speisestroms, auf den begrenzt wird, ohne Verzögerung dem abfallenden Kondensatorstrom und sinkt. Auf diese Weise wird ein effektiver Schutz vor sehr großen Überströmen gewährleistet, die beispielsweise bei einem Kurzschluß auf den Teilnehmerleitungen auftreten. Andererseits können für einen bestimmten Zeitraum größere Ströme als der Nennstrom der Speiseschaltung geliefert werden.

In einer weiteren Ausgestaltung der Erfindung wird in Reihe zum Kondensator und zur Parallelschaltung aus drittem Widerstand und erstem Transistor ein vierter Widerstand geschaltet. Der Zeitverlauf des Abfalls des Kondensatorstroms und damit des Speisestroms läßt sich so im Überstromfall auf einfache Weise einstellen.

In einer weiteren Ausgestaltung ist parallel zum Kondensator eine Reihenschaltung aus einem fünften Widerstand und einer Diode angeordnet, deren Kathode mit demjenigen der beiden Kondensatoranschlüsse verbunden ist, der beim Betrieb der Speiseschaltung ein geringeres Potential aufweist. Im Normalbetrieb der Speiseschaltung fließt ein über den dritten Widerstand fließender Strom am Kondensator vorbei und über den fünften Widerstand und die Diode. Wird der zweite Transistor mit der Verbindung zwischen dem fünften Widerstand und der Diode gekoppelt, fließt im Überstromfall, wenn der zweite Transistor in den leitenden Zustand übergeht, ein durch den fünften Widerstand fließender Strom nicht mehr über die Diode durch den dritten Widerstand, sondern wird vom zweiten Transistor übernommen. Dieser Strom kann somit die erste Transistoranordnung durch Erzeugung einer Spannung am dritten Widerstand nicht mehr leitend steuern. Die Diode verhindert, daß der Ladestrom des Kondensators ebenfalls über den zweiten Transistor abfließt.

Ein sechster Widerstand zur Kopplung des Steuereingangs des zweiten Transistors mit dem mit einem Ausgang der Speiseschaltung gekoppelten Anschluß der ersten Begrenzungsschaltung bewirkt, daß die Steuerspannung des zweiten Transistors von der Spannung an der ersten Reihenschaltung von erster Transistoranordnung und erstem Speisewiderstand abhängt. Es entsteht im Überstromfall ein Mitkopplungseffekt. Geht im Überstromfall die erste Transistoranordnung in den sperrenden Zustand über, so steigt die Spannung an der ersten Reihenschaltung an. Durch die Kopplung mit Hilfe des sechsten Widerstandes wird die Steuerspannung am zweiten Transistor erhöht, die Steuerspannung der ersten Transistoranordnung wird weiter verringert und das Sperren der ersten Transistoranordnung beschleunigt. Weiterhin wird durch den sechsten Widerstand sichergestellt, daß nach einem Ausschalten der Speiseschaltung im Überstromfall der zweite Transistor mit einer ausreichenden Steuerspannung versorgt wird, so daß die erste Transistoranordnung und damit auch die zweite Transistoranordnung im sperrenden Zustand gehalten werden und die Speiseschaltung keinen Speisestrom liefert.

Bei einer beispielsweise als Telekommunikationsanlage (TK-Anlage) mit digitalen Teilnehmer-, Amts- oder Querverbindungsanschlüssen ausgeführten Vermittlungsvorrichtung ist es vorteilhaft, daß die Speiseschaltung von einer in der Vermittlungsvorrichtung angeordneten Steuerung ein- und ausschaltbar ist. Eine Schnittstelle, an die ein digitales Teilnehmerendgerät anschließbar ist (mit Speisung), kann auf diese Weise so umkonfiguriert werden, daß sie an ein Netzabschlußgerät eines öffentlichen Netzes anschließbar ist (ohne Speisung). Eine solche Umkonfigurierung ist so allein durch Änderung der Kundendaten realisierbar. Die normalerweise notwendige Umkonfigurierung der Hardware durch Schalter oder Jumper kann entfallen.

Vorteilhaft ist weiterhin eine digitale Signalisierung einer Abschaltung der Speiseschaltung. Digitalsignale einer solchen Signalisierung können benutzt werden, um weitere Maßnahmen zum Schutz der Vermittlungsvorrichtung oder zur Fehlerbeseitigung durchzuführen. Die Signalisierung kann zum automatischen Wiedereinschalten der Speisung nach einer vorgebbaren Zeitspanne oder zum Erzeugen eines optischen oder akustischen Warnsignals dienen, damit Wartungspersonal auf den Fehlerzustand der Vermittlungsvorrichtung aufmerksam gemacht wird.

Die Erfindung betrifft weiterhin eine Speiseschaltung zur Gleichstromversorgung eines Teilnehmerendgeräts für eine Vermittlungsvorrichtung, die
- eine erste Begrenzungsschaltung mit einer ersten Reihenschaltung aus einer ersten Speisetransistorandordnung und einer ersten Speisewiderstandsanordnung zur Begrenzung eines durch die erste Reihenschaltung fließenden Speisestroms und
- eine zweite Begrenzungsschaltung mit einer zweiten Reihenschaltung aus einer zweiten Speisetransistoranordnung und einer zweiten Speisewiderstandsanordnung zur Begrenzung eines durch die zweite Reihenschaltung fließenden Speisestroms
enthält, wobei ein am Steuereingang der zweiten Speisetransistoranordnung anliegendes Potential von einer an der ersten Reihenschaltung anliegenden Spannung abhängt.

Ein Ausführungsbeispiel der Erfindung wird nachstehend anhand der Zeichnungen näher erläutert. Es zeigen:
- Fig. 1: eine Vermittlungsvorrichtung mit einem angeschlossenen Teilnehmerendgerät und
- Fig. 2: eine Speiseschaltung zur Gleichstromversorgung des Teilnehmerendgerätes

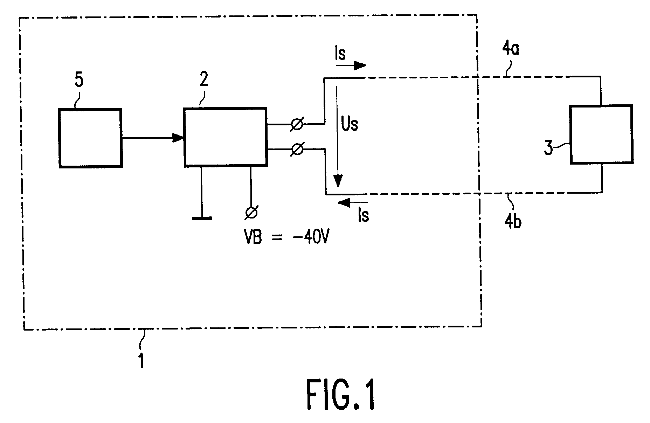

Die in Fig. 1 dargestellte Vermittlungsvorrichtung 1 - vorzugsweise eine Nebenstellenanlage bzw. Telekommunikationsanlage (TK-Anlage) für digitale Teilnehmerendgeräte - weist eine Speiseschaltung 2 auf, die zur Versorgung mindestens eines Teilnehmerendgerätes 3 dient. In Fig. 1 ist nur ein angeschlossenen Teilnehmerendgerät 3 dargestellt. Weitere Teilnehmerendgeräte werden diesem parallel geschaltet. An einem ersten Eingang der Speiseschaltung 2 liegt ein erstes Bezugspotential, im vorliegenden Fall Massepotential. An einem zweiten Eingang liegt ein zweites Bezugspotential VB, beispielsweise -40 V. Die somit an den beiden Eingängen anliegende Spannung von 40 V wird von der Speiseschaltung 2 in eine Speisespannung Us umgesetzt. Das Teilnehmerendgerät 3 kann so mit einem Speisestrom Is versorgt werden. Die Speiseschaltung 2 dient sowohl zum Schutz von Teilnehmerleitungen 4a und 4b für zwei Strompfade zur Hin- und Rückleitung des Speisestroms Is, als auch zum Schutz von Bauelementen der Vermittlungsvorrichtung 1 und des Teilnehmerendgerätes 3 vor Überströmen, d.h. vor unzulässig hohen Speiseströmen Is in einem Fehlerfall. Die Speiseschaltung 2 ist weiterhin mit einer Steuervorrichtung 5 gekoppelt, deren Funktion später erläutert wird. Weitere für die Erfindung nicht wesentliche Elemente der Vermittlungsvorrichtung sind aus Gründen der Übersichtlichkeit nicht dargestellt.

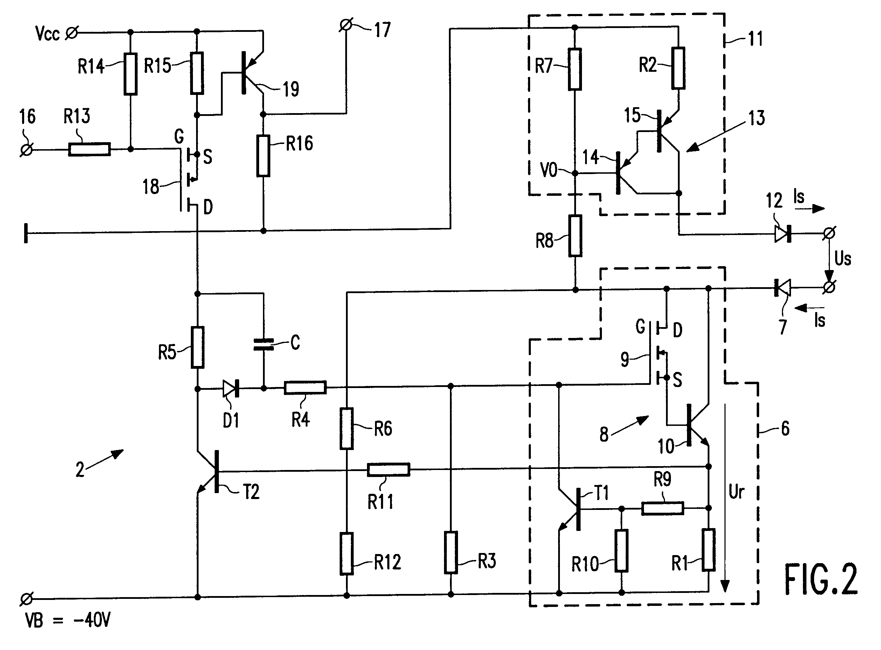

In Fig. 2 ist die Speiseschaltung 2 aus Fig. 1 im Detail dargestellt. Für beide Gleichstrompfade zwischen Speiseschaltung 2 und Teilnehmerendgerät 3, über die der Speisestrom Is fließt, ist jeweils eine Begrenzungsschaltung vorgesehen. Die erste Begrenzungsschaltung 6 liegt zwischen dem Bezugspotential VB und einem ersten der beiden Ausgänge der Speiseschaltung 2. Zum Verpolungsschutz, d.h. zum Schutz der Speiseschaltung 2 vor falschgepolten Überströmen im Fehlerfall, ist eine Diode 7 zwischen dem ersten von zwei Ausgängen der Speiseschaltung 2 und der ersten Begrenzungsschaltung 6 angeordnet. Die erste Begrenzungsschaltung 6 weist eine erste Reihenschaltung aus einer als steuerbarer Widerstand und als Schalter wirkenden ersten Transistoranordnung 8 und einem Speisewiderstand R1 (erste Speisewiderstandsanordnung) auf. Die erste Transistoranordnung 8 besteht aus einem MOS-Feldeffekttransistor 9 (n-Kanal-Anreicherungs-MOS-FET, n-Kanal) und einem NPN-Bipolartransistor 10, die als Darlington-Schaltung angeordnet sind. Der Source-Anschluß des Transistors 9 ist dazu mit der Basis des Transistors 10 verbunden. Die Verwendung eines Feldeffekttransistors gewährleistet aufgrund des vernachlässigbar kleinen Steuer- bzw. Gatestromes eine vernachlässigbar geringe Rückwirkung auf einen an den Gateanschluß angeschlossene Schaltungsteil.

Der Drain-Anschluß des Feldeffekttransistors 9 und der Kollektor des Bipolartransistors 10 sind mit der Kathode der Diode 7 verbunden. Der Widerstand R1 liegt zwischen dem Emitter des Bipolartransistors 10 und dem Bezugspotential VB. Parallel zum Widerstand R1 liegt ein aus einem Widerstand R9 und einem Widerstand R10 bestehender Spannungsteiler dessen Mittenabgriff mit dem Basisanschluß eines Bipolartransistors T1 (erster Transistor) verbunden ist. Der Kollektor des Transistors T1 liegt am Gate-Anschluß G des Transistors 9, dem Steuereingang der Transistoranordnung 8. Der Emitter des Tranistors T1 ist mit dem Bezugspotential VB verbunden. Zwischen dem Massepotential und dem zweiten Ausgang der Speiseschaltung 2 liegt eine zweite Begrenzungsschaltung 11.

Zwischen dem zweiten Ausgang der Speiseschaltung 2 und der Begrenzungsschaltung 11 liegt wie bei der ersten Begrenzungsschaltung zum Verpolungsschutz eine Diode 12. Die zweite Begrenzungsschaltung 11 enthält eine zweite Reihenschaltung aus einer als steuerbarer Widerstand und als Schalter wirkenden zweiten Transistoranordnung 13 und einem Speisewiderstand R2 (zweite Speisewiderstandsanordnung). Die zweite Transistoranordnung 13 ist eine Darlington-Schaltung aus zwei PNP-Bipolartransistoren 14 und 15. Dazu ist der Kollektor des Transistors 14 mit der Basis des Transistors 15 verbunden. Die Kollektoren der Transistoren 14 und 15 sind mit der Anode der Diode 12 verbunden. Parallel zu den in Reihe liegenden Basis-Emitter-Strecken der Tranisistoren 14 und 15 liegt eine Reihenschaltung aus dem Widerstand R2 und einem Widerstand R7. Ein Anschluß des Widerstands R7 ist mit der Basis des Transistors 14 - dem Steuereingang der zweiten Transistoranordnung 13 - verbunden. Der Verbindungspunkt zwischen den Widerständen R7 und R2 liegt auf dem Massepotential. Der andere Anschluß von R2 ist mit dem Emitter des Transistors 15 verbunden. Zwischen dem Steuereingang der zweiten Transistoranordnung 13 und dem Drain-Anschluß des Transistors 9 bzw. dem Kollektor des Transistors 10 liegt ein Widerstand R8. Dieser bildet zusammen mit dem Widerstand R7 einen Spannungsteiler, der zwischen dem Massepotential und der Reihenschaltung aus erster Transistoranordnung 8 und erstem Speisewiderstand R1 liegt.

Parallel zum Speisewiderstand R1 liegt ein aus einem Widerstand R11 und einem Widerstand R12 bestehender Spannungsteiler, dessen Mittenabgriff mit der Basis eines NPN-Bipolartransistors T2 (zweiter Transistor) verbunden ist. Der Emitter des Transistors T2 liegt am Bezugspotential VB, der Kollektor des Transistors T2 ist mit der Anode einer Diode D1 verbunden. Die Diode D1 entkoppelt die parallel geschalteten Transistoren T1 und T2. Zwischen der Kathode der Diode D1 und dem Gate-Anschluß des Transistors 9 liegt ein Widerstand R4 (vierter Widerstand). Zwischen dem Gate-Anschluß G des Transistors 9 und dem Bezugspotential VB ist ein Widerstand R3 (dritter Widerstand) angeordnet, der damit parallel zur Kollektor-Emitter-Strecke des Transistors T1 liegt. Die Anode der Diode D1 ist weiterhin mit einem Anschluß eines Widerstandes R5 (fünfter Widerstand) verbunden, dessen anderer Anschluß mit einem Anschluß eines Kondensators C verbunden ist. Der andere Anschluß des Kondensators C ist mit der Kathode der Diode D1 verbunden.

Über zwei Anschlüsse 16 und 17 ist die Speiseschaltung 2 mit der Steuervorrichtung 5 gekoppelt. Über den Anschluß 16 empfängt die Speiseschaltung 2 digitale Steuersignale von der Steuervorrichtung 5, über den Anschluß 17 erfolgt eine digitale Signalisierung eines Überstroms an die Steuervorrichtung 5. Zwischen dem Anschluß 16 und dem Gate-Anschluß G eines MOS-Feldeffekttransistors 18 (Anreicherungs-MOS-FET, p-Kanal) liegt ein Widerstand R13. Der Verbindungspunkt zwischen dem Widerstand R13 und dem Gate-Anschluß des Transistors 18 ist über einen Widerstand R14 mit einem Potential Vcc (5V) verbunden. Zwischen dem Potential Vcc und dem Source-Anschluß des Transistors 18 ist ein Widerstand R15 angeordnet. Der Drain-Anschluß des Transistors 18 ist mit dem Verbindungspunkt zwischen dem Widerstand R5 und dem Kondensator C verbunden. Zwischen dem Potential Vcc und dem Massepotential liegt die Reihenschaltung eines PNP-Transistors 19 und eines Widerstands R16. Der Emitter des Transistors 19 liegt am Potential Vcc, sein Basisanschluß ist mit dem Verbindungspunkt zwischen dem Widerstand R15 und dem Source-Anschluß des Transistors 18 verbunden. Der Kollektor des Transistors 19 ist über den Widerstand R16 mit dem Massepotential gekoppelt.

Bei normaler Last an den Ausgängen der Speiseschaltung 2 (z.B. Is = 100 mA) ist keine Begrenzung des Speisestroms Is durch Sperren der Transistoranordnungen 8 und 13 wirksam. Der Speisestrom Is fließt im wesentlichen vom Massepotential über die Reihenschaltung aus zweitem Speisewiderstand R2 und zweiter Transistoranordnung 13, die Diode 12, das Teilnehmerendgerät 3 bzw. über weitere parallel zum Teilnehmerendgerät 3 geschaltete Teilnehmerendgeräte, die Diode 7 und über die Reihenschaltung aus erster Transistoranordnung 8 und erstem Speisewiderstand R1 zum Bezugspotential VB. Die Transistoren T1 und T2 sperren. Die Steuervorrichtung 5 legt an den Anschluß 16 Massepotential (0 V), so daß der Transistor 18 leitet. Vom Potential Vcc kann über den Widerstand R15, den Transistor 18, den Widerstand R5, die Diode D1, den Widerstand R4 und den Widerstand R3 ein Strom fließen. Der durch diesen Strom hervorgerufene Spannungsabfall am Widerstand R3 reicht aus, um die erste Transistoranordnung 8 leitend zu steuern. Das Potential am Drain-Anschluß des Transistors 9 bzw. am Kollektor des Transistors 10 ist so niedrig, daß auch die zweite Transistoranordnung 13 über den Spannungsteiler R7 und R8 leitend gesteuert wird. Der Strom durch den Transistor 18 ist aufgrund der Größe der Widerstände R3 und R4 so klein, daß der Transistor 19 sperrt und am Anschluß 17 Massepotential (digitale Null) anliegt. Der Steuervorrichtung 5 wird so der Normalzustand signalisiert. Der Kondensator C ist in für diesen Fall nahezu völlig entladen.

Überschreitet in einem ersten Überstromfall der Speisestrom Is einen durch die Widerstände R11 und R12 einstellbaren ersten Schwellwert (130 mA), so geht der Transistor T2 in den leitenden Zustand über. Der Transistor T1 bleibt weiterhin gesperrt, denn im ersten Überstromfall liegt dieser Überstrom noch unter einem durch die Widerstände R9 und R10 einstellbaren zweiten Schwellwert. Der zweite Schwellwert ist größer als der erste eingestellt, da das Widerstandsverhältnis von R10 zu R9 (hier gleich 1) kleiner ist als das Widerstandsverhältnis von R12 zu R11 (hier gleich 12,1) ist. Der erste Überstromfall tritt beispielsweise dann auf, wenn Kondensatoren eines Teilnehmerendgeräts bei dessen Anschluß an die Speiseschaltung 2 aufgeladen werden. Mit steigender Leitfähigkeit des Transistors T2 fließt ein über den Widerstand R5 geführter jetzt ansteigender Strom immer mehr über den Transistor T2 direkt zum Bezugspotential VB ab, so daß der Strom über die Diode D1 abfällt. Das Ansteigen der Leitfähigkeit des Transistors T2 korrespondiert mit einer Aufladung des Kondensators C. Der Kondensatorstrom fließt über die Widerstände R4 und R3 zum Bezugspotential VB. Ein Abfließen des Kondensatorstromes über den leitenden Transistor T2 wird durch die Diode D1 verhindert. Für eine bestimmte von der Höhe des Überstromes abhängige Zeitspanne kann der Kondensatorstrom einen so großen Spannungsabfall am Widerstand R3 (> 4 V) bewirken, daß die erste Transistoranordnung 8 ihre Leitfähigkeit nahezu behält und von der Speiseschaltung 2 ein konstanter Überstrom Is geliefert wird. Nach dieser Zeitspanne ist die durch den Kondensatorstrom hervorgerufene Spannung am Widerstand R3 so weit abgesunken, daß die erste Transistoranordnung 8 in den sperrenden Zustand übergeht. Die Leitfähigkeit der ersten Transistoranordnung 8 sinkt dann entsprechend dem Abfall des Kondensatorstroms. Der Verlauf des Abfalls des Kondensatorstroms wird im wesentlichen durch die Widerstände R3 und R4 bestimmt, wobei eine Einstellung des Zeitverlaufs insbesondere durch die Auswahl des Widerstandswertes von R4 erfolgt, um eine Rückwirkung auf die anderen Schaltungsteile der Speiseschaltung 2 gering zu halten. Je weiter der Speisestrom Is über dem ersten Schwellwert liegt und je größer somit die Leitfähigkeit des Transistors T2 ist, desto kürzer ist der Zeitraum, in dem die Speiseschaltung 2 im ersten Überstromfall einen konstanten Überstrom liefert. Ein beim Anschluß eines Teilnehmerendgeräts durch die Aufladung von Kondensatoren des Teilnehmerendgeräts verursachter zeitlich begrenzter Überstrom kann somit von der Speiseschaltung 2 geliefert werden, ohne daß diese sich ausschaltet. Erst wenn in einem Fehlerfall ein zwischen dem ersten und zweiten Schwellwert liegender Überstrom Is länger als der oben erwähnte und von der Höhe des Überstroms abhängige Zeitraum andauert, schaltet sich die Speiseschaltung 2 zum Schutz der Vermittlungsvorrichtung und der Teilnehmerleitungen 4a und 4b aus, d. h. der Speisestrom Is wird auf Null abgesenkt.

Ist der Kondensatorstrom im ersten Überstromfall so weit abgesunken, daß die erste Transistoranordnung 8 in den sperrenden Zustand übergeht, erhöht sich der Spannungsabfall Ur an der Reihenschaltung aus erster Transistoranordnung 8 und erstem Speisewiderstand R1 insbesondere auf Grund des erhöhten Durchlaßwiderstandes der Transistoranordnung 8. Das negative Potential zwischen dem Widerstand R8 und der Transistoranordnung 8 (Potential am Drain-Anschluß von Transistor 9) steigt. Damit sinkt die am Spannungsteiler R7, R8 anliegende Spannung. Das Potential V0 am Steuereingang der Transistoranordnung 13 (Basis von T14) steigt, so daß ihre Steuerspannung (Spannung zwischen der Basis von T14 und dem Emitter von T15) betragsmäßig sinkt. Die Transistoranordnung 13 wird auf diese Weise gesperrt. Die zweite Transistoranordnung 13 hängt somit vom Zustand der ersten Transistoranordnung 8 ab. Die Spannung zwischen dem Massepotential und dem Bezugspotential VB fällt im Überstromfall im wesentlichen zu gleichen Teilen an der ersten Transistoranordnung 8 und der zweiten Transistoranordnung 13 ab. Im Gegensatz zur Verwendung nur einer zur Strombegrenzung dienenden Transistoranordnung wird die im Überstromfall entstehende Verlustleistung halbiert, so daß kostengünstigere Transistoren mit geringerer maximal zulässiger Verlustleistung in den Transistoranordnungen einsetzbar sind.

Nach dem Abschalten der Speiseschaltung 2, d.h einem Absinken des Speisestroms Is auf 0, wird durch den Widerstand R6 sichergestellt, daß der Transistor T2 leitend und die Speiseschaltung 2 ausgeschaltet bleibt. Durch einen Stromfluß über die Widerstände R6 und R12 wird dem Transistor T2 eine ausreichende Steuerspannung (Spannung an R12) zugeführt, so daß T2 leitend bleibt, auch wenn die Spannung am Speisewiderstand R1 abgesunken ist. Der Widerstand R6 verursacht weiterhin einen Mitkoppelungseffekt. Das im Überstromfall ansteigende Potential zwischen dem Widerstand R8 und der Transistoranordnung 8 ist über den Widerstand R6 mit der Basis bzw. dem Steuereingang des Transistors T2 gekoppelt, was zu einem schnelleren leitend werden des Transitors T2 und damit zu einem schnelleren Abschalten der Speiseschaltung 2 führt.

Steigt der Speisestrom Is in einem zweiten Überstromfall über den zweiten Schwellwert an, so bewirkt die als erste Begrenzungsschaltung 6 geschaltete erste Transistoranordnung 8 ein beschleunigtes Abschalten der Speiseschaltung 2. Die verbleibende Verzögerungszeit wird durch den Widerstand R4 bestimmt. Der zweite Überstromfall tritt beispielsweise bei einem echten Kurzschluß auf den Teilnehmerleitungen 4a, 4b oder im Teilnehmerendgerät 3 auf. Der Spannungsabfall am ersten Speisewiderstand R1 ist dann so groß, daß der Transistor T1 leitend wird. Der analog zum ersten Überstromfall bewirkte Kondensatorstrom fließt zum großen Teil nicht mehr über den Widerstand R3 sondern über den Transistor T1 zum Bezugspotential VB. Der Widerstand der Transistoranordnung 8 wird damit erhöht und der Speisestrom begrenzt, da die Spannung am Widerstand R3 stark verkleinert ist. Analog zu der im ersten Überstromfall erläuterten Funktionsweise der Speiseschaltung 2 wird auch der Widerstand der zweiten Transistoranordnung 13 erhöht. Sehr große Überströme werden somit durch die Speiseschaltung 2 auf einen einstellbaren Maximalwert begrenzt. Bauelemente im Teilnehmerendgerät und in der Vermittlungsvorrichtung sowie die Teilnehmerleitungen 4a und 4b sind wirkungsvoll vor solchen Überströmen geschützt.

Die erfindungsgemäße Vermittlungsvorrichung weißt damit eine Speiseschaltung auf, mit der das auf den Seiten 16-24 und 155-167 der europäischen Telekommunikationsnorm ETS 300 012 festgelegte Abschaltverhalten einer Speiseschaltung für einen ISDN-Basisanschluß realisierbar ist.

Die zweite Begrenzungsschaltung 11 mit der zweiten Transistoranordnung 13 arbeitet auch unabhängig von der ersten Begrenzungsschaltung 6. Ist die mit der zweiten Transistoranordnung 13 gekoppelte Teilnehmerleitung 4a beispielsweise statisch aufgeladen und existiert weiterhin eine Verbindung zum Massepotential, verhindert die zweite Begrenzungsschaltung 11 eine Erhöhung des Stroms über die Masseleitung über einen vorgebbaren Schwellwert, so daß eine Schädigung von Bauteilen der Vermittlungsvorrichtung und der Masseleitung verhindert wird.

Ist die Speiseschaltung 2 abgeschaltet, fließt über den Widerstand R15, den Transistor 18 und den Widerstand R5 ein erhöhter Strom über den nun leitenden Transistor T2 zum Bezugspotential VB. Bei sperrendem Transistor T2 ist der Widerstand R5 dagegen nur über die große Widerstandswerte aufweisenden Widerstände R4 und R3 mit dem Bezugspotential VB gekoppelt, so daß nur ein entsprechend niedrigerer Strom über den Transistor 18 fließen kann. Bei erhöhtem Stromfluß durch den Transistor 18 leitet der Transistor 19, so daß am Anschluß 17 der Speiseschaltung 2 das Potential Vcc (5V) und so ein Überstromfall bzw. eine Ausschaltung der Speiseschaltung 2 signalisiert wird. Die Signalisierung des Potentials Vcc entspricht der Signalisierung einer digitalen Eins.

Auch ein softwaremäßiges Abschalten der Speiseschaltung 2 ist möglich. Dazu wird durch die Steuervorrichtung 5 an den Anschluß 16 eine digitale Eins (Vcc, 5V) angelegt. Dann sperrt der Transistor 18, so daß insbesondere ein Stromfluß durch den Widerstand R3 verhindert wird. Die erste Transistoranordnung 8 und damit auch die zweite Transistoranordnung 13 gehen in den sperrenden Zustand über. Durch das Anlegen einer digitalen Eins an den Anschluß 16 ist es weiterhin möglich, nach einem Ausschaltevorgang der Speiseschaltung 2 den Kondensator C zu entladen, um ein erneutes Anschalten der Speiseschaltung 2 zu ermöglichen.

## Patentansprüche

1. Vermittlungsvorrichtung mit mindestens einer Speiseschaltung (2), die zur Gleichstromversorgung mindestens eines Teilnehmerendgerätes vorgesehen ist und die
- eine erste Begrenzungsschaltung (6) mit einer ersten Reihenschaltung aus einer ersten Speisetransistoranordnung (8) und einer ersten Speisewiderstandsanordnung (R1) zur Begrenzung eines durch die erste Reihenschaltung fließenden Speisestroms (Is) und
- eine zweite Begrenzungsschaltung (11) mit einer zweiten Reihenschaltung aus einer zweiten Speisetransistoranordnung (13) und einer zweiten Speisewiderstandsanordnung (R2) zur Begrenzung eines durch die zweite Reihenschaltung fließenden Speisestroms (Is)
enthält, wobei ein am Steuereingang der zweiten Speisetransistoranordnung (13) anliegendes Potential (V0) von einer an der ersten Reihenschaltung anliegenden Spannung (Ur) abhängt.

2. Vermittlungsvorrichtung mit einer Speiseschaltung nach Anspruch 1,
dadurch gekennzeichnet,
daß zwischen einem ersten und einem zweiten Bezugspotential (Masse, VB) ein Spannungsteiler (R7, R8), dessen mittlerer Anschluß mit dem Steuereingang der zweiten Speisetransistoranordnung (13) gekoppelt ist, in Reihe zur ersten Reihenschaltung angeordnet ist.

3. Vermittlungsvorrichtung mit einer Speiseschaltung nach Anspruch 1 oder 2,
dadurch gekennzeichnet,
daß die erste Begrenzungsschaltung (6) einen ersten Transistor (T1) enthält, dessen Steuerspannung von der Spannung an der ersten Speisewiderstandsanordnung (R1) abhängig ist und
daß das am Steuereingang der ersten Speisetransistoranordnung (8) anliegende Potential von der am ersten Transistor (T1) anliegenden Spannung abhängig ist.

4. Vermittlungsvorrichtung mit einer Speiseschaltung nach Anspruch 3,
dadurch gekennzeichnet,
daß dem ersten Transistor (T1) ein dritter Widerstand (R3) parallel geschaltet ist,
daß ein parallel zum ersten Transistor (T1) angeordneter zweiter Transistor (T2) vorgesehen ist, dessen Steuerspannung von der Spannung an der ersten Speisewiderstandsanordnung (R1) bestimmt wird, wobei die beiden Transistoren (T1, T2) durch eine Diode (D1) entkoppelt sind,
daß der zweite Transistor (T2) bei einem betragsmäßig kleineren Speisestrom (Is) leitend wird als der erste Transistor (T1) und im leitenden Zustand einem Stromfluß durch den dritten Widerstand (R3) entgegenwirkt und
daß bei einem Überstrom (Is) ein Kondensator (C) über die Parallelschaltung aus drittem Widerstand (R3) und erstem Transistor (T1) umgeladen wird.

5. Vermittlungsvorrichtung mit einer Speiseschaltung nach Anspruch 4,
dadurch gekennzeichnet,
daß ein vierter Widerstand (R4) in Reihe zum Kondensator (C) und zur Parallelschaltung aus drittem Widerstand (R3) und erstem Transistor (T1) geschaltet ist.

6. Vermittlungsvorrichtung mit einer Speiseschaltung nach Anspruch 4 oder 5,
dadurch gekennzeichnet,
daß parallel zum Kondensator (C) die Reihenschaltung aus einem fünften Widerstand (R5) und einer Diode (D1) angeordnet ist, deren Kathode mit demjenigen der beiden Kondensatoranschlüsse verbunden ist, der beim Betrieb der Speiseschaltung (2) ein geringeres Potential aufweist.

7. Vermittlungsvorrichtung mit einer Speiseschaltung nach einem der Ansprüche 4 bis 6,
dadurch gekennzeichnet,
daß der zweite Transistor (T2) mit der Verbindung zwischen dem fünftem Widerstand (R5) und der Diode (D1) gekoppelt ist.

8. Vermittlungsvorrichtung mit einer Speiseschaltung nach einem der Ansprüche 4 bis 7,
dadurch gekennzeichnet,
daß ein sechster Widerstand (R6) zur Kopplung des Steuereingangs des zweiten Transistors (T2) mit dem mit einem Ausgang der Speiseschaltung (2) gekoppelten Anschluß der ersten Begrenzungsschaltung (6) vorgesehen ist.

9. Vermittlungsvorrichtung mit einer Speiseschaltung nach einem der Ansprüche 1 bis 8,
dadurch gekennzeichnet,
daß die Speiseschaltung (2) von einer in der Vermittlungsvorrichtung angeordneten Steuerung (5) ein- und ausschaltbar ist.

10. Vermittlungsvorrichtung mit einer Speiseschaltung nach einem der Ansprüche 1 bis 9,
dadurch gekennzeichnet,
daß eine digitale Signalisierung einer Abschaltung der Speiseschaltung (2) vorgesehen ist.

11. Speiseschaltung zur Gleichstromversorgung mindestens eines Teilnehmerendgeräts für eine Vermittlungsvorrichtung, die
- eine erste Begrenzungsschaltung (6) mit einer ersten Reihenschaltung aus einer ersten Speisetransistoranordnung (8) und einer ersten Speisewiderstandsanordnung (R1) zur Begrenzung eines durch die erste Reihenschaltung fließenden Speisestroms und
- eine zweite Begrenzungsschaltung (11) mit einer zweiten Reihenschaltung aus einer zweiten Speisetransistoranordnung (13) und einer zweiten Speisewiderstandsanordnung (R2) zur Begrenzung eines durch die zweite Reihenschaltung fließenden Speisestroms (Is)
enthält, wobei eine Steuerspannung der zweiten Speisetransistoranordnung (13) von einer an der ersten Reihenschaltung (8, R1) anliegenden Spannung abhängt.
